# EUROPÄISCHE PATENTANMELDUNG

(11) **EP 4 826 483 A1**
(43) Veröffentlichungstag der Anmeldung: **21.10.2026**
(21) Anmeldenummer: 26154819.2
(22) Anmeldetag: 28.01.2026
(51) Int. Cl.: G05D 1/82, F41G 7/00, G05D 105/35, G05D 107/30, G05D 109/28

(54) **VERFAHREN ZUR STEUERUNG EINES SYSTEMS ZUR BEEINFLUSSUNG EINES FÜR EINEN AUTONOMIEBETRIEB AUSGESTATTETEM MOBILEN OBJEKTS, STEUERGERÄT, OBJEKT**

(30) Priorität: 14.04.2025 DE 102025001261
(71) Anmelder: MBDA Deutschland GmbH, 86529 Schrobenhausen (DE)
(72) Erfinder: LAMAC, Klaus, 80993 München (DE); GROßMANN, Florian, 86558 Hohenwart (DE)
(74) Vertreter: Isarpatent

(57) **Zusammenfassung**

Die vorliegende Erfindung betrifft ein Verfahren (M) zur Steuerung eines Systems zur Beeinflussung eines für einen Autonomiebetrieb ausgestattetem mobilen Objekts (120) umfassend die folgenden Schritte: Bereitstellen eines Systems mit Steuerungsprogramm zur Beeinflussung eines für einen Autonomiebetrieb ausgestattetem mobilen Objekts (120) in einem für einen Autonomiebetrieb ausgestattetem mobilen Objekt (120), Starten des Systems, Starten des Objekts (120), Einstellen von Autonomiegraden des Systems in Abhängigkeit wenigstens eines Auslöseereignisses, sodass mittels des jeweiligen gewählten Autonomiegrades wenigstens ein Betriebsparameter des Objekts (120) zur Einstellung dessen Autonomiebetriebs beeinflusst wird. Zudem wird ein Steuergerät (100), insbesondere ein zumindest teilweise virtuelles Steuergerätesystem, sowie ein Objekt (120), insbesondere ein flugfähiges Objekt, offenbart.

## Beschreibung

### TECHNISCHES GEBIET DER ERFINDUNG

Die vorliegende Erfindung betrifft ein Verfahren zur Steuerung eines Systems zur Beeinflussung eines für einen Autonomiebetrieb ausgestattetem mobilen Objekts. Zudem betrifft die vorliegende Erfindung des Weiteren ein Steuergerät insbesondere ein zumindest teilweise virtuelles Steuergerätsystem, zur Steuerung eines Objekts und ein Objekt, insbesondere ein flugfähiges Objekt.

### HINTERGRUND DER ERFINDUNG

Für die Mobilität von Objekten jeglicher Art, insbesondere für flugfähige Objekte, werden zukünftig autonome bzw. hochgradig automatisierte Steuerungskonzepte eine zentrale Rolle spielen. Hierbei werden unter anderem Einsätze der sogenannten künstlichen Intelligenz als eine von zahlreichen antizipierten Methoden zum Einsatz kommen.

In bisher bekannten Anwendungsfällen starten derartige mobile Objekte bereits als autonom agierende Systeme, wobei mittels Auswertungen von begleitenden Sensorsystemen in Echtzeit jeweils eine Aktion bzw. definierte Handlungsfolgen abgeleitet werden. Für militärische Einsätze werden derartige Konzepte in zukünftigen Anwendungen für mobile Objekte in der Luft, auf dem Land oder im Wasser zunehmend gefordert werden. Allerdings gestalten sich die Ausformulierungen von Zulassungsanforderungen für unterschiedliche Autonomie- bzw. Automatisierungsgraden von mobilen Objekten insbesondere immer dann schwierig, wenn sich während eines Einsatzes Situationen und/oder Umgebungsparameter dynamisch und sehr schnell ändern.

So sind vor allem derzeit Zulassungen von autonomen bzw. hochgradig automatisierten (Waffen-) Systemen nicht verbindlich geregelt. Es fehlt hierfür an einer Technologie, mittels derer eine bestehende Lücke zwischen technisch machbaren und gewollten Fähigkeiten einerseits und einer entsprechenden Regelungen andererseits, ermöglicht wird. Dabei sollen insbesondere unterschiedlichste Aspekte von derartigen Einsätzen unter Gesamtabwägung aller Zielanforderungen berücksichtigt werden. Es besteht demnach ein Bedarf an Technologien, welche autonomes Verhalten von Systemen und zu bewegenden Objekten flexibel gestalten lässt, ohne dabei die Zulassungsfähigkeit der Systeme außer Acht zu lassen. Da zunehmend bemannte Systeme außerhalb von Gefahrenzonen agieren sollen, sind in diesem Zusammenhang Technologien gesucht, welche unbemannte Systeme im Sinne der zuvor genannten Vorgaben auch unter hochdynamischen Einflüssen aktionsfähig ausgestalten.

Solch eine Technologie sollte dabei eine gewisse Variabilität bei unterschiedlichsten Betriebseinsätzen aufweisen und gleichzeitig hohe Sicherheitsanforderungen hinsichtlich der technischen Einsatzbandbreite erfüllen. Die Sicherheitsanforderungen sollten dabei insbesondere hinsichtlich ungewollter Ausführungsroutinen von autonom agierenden Objekten bzw. Systemen ausgerichtet sein, sodass an dieser Stelle jeglichen ungewollten Situationen mittels entsprechender Sicherheitsvorkehrungen begegnet werden kann.

Mit anderen Worten darf eine zukünftige Technologie nicht ausgelegt sein, aufgrund von unvorhersehbaren Umständen, wie beispielsweise eines externen überraschenden Einflusses, direkt und ohne einer letztmöglichen Kontrollmöglichkeit seitens eines Benutzers (oder einer Benutzerroutine im Sinne einer Unterstützung von einer künstlichen Intelligenz oder dergleichen) in einen vollautonomen Betriebsmodus zu wechseln. Die Folgen könnten an dieser Stelle nicht nur vorgegebene Regelwerke verletzen, sondern gegebenenfalls zu ungewollten destruktiven Einflüssen führen.

Objekte bzw. Systeme, welche vorgegebene Freiheitsgrade im Sinne von jeglichen automatisierten Handlungsfolgen bereits vor dem Start einer Mission vermittelt bekommen, beispielsweise in Form von Missionsplänen oder dergleichen, stoßen immer dann an ihre Grenzen und geraten mit vorgegebenen Regelwerken in Konflikte, wenn sich eine Situation während des Einsatzes hochgradig dynamisch verändert.

Solche Änderungsszenarien können sich zum Beispiel aufgrund von veränderten Zielpositionen oder aufgrund von ungeplanten Bedrohungsszenarien einstellen. Ein stringentes Verfolgen eines detaillierten Missionsplanes kann im schlimmsten Fall dann zu ungewünschten bzw. ungewollten Zuständen führen. Da zudem häufig derartige Szenarien, in denen sich die mobilen Objekte befinden können, in Regionen abspielen, in denen mit zumindest zeitweiser Unterbrechung der Kommunikationswege zu rechnen ist, greifen ausschließlich ferngesteuerte Konzepte an dieser Stelle nicht.

Voreinstellungen hinsichtlich eines reinen autonomen Betriebes könnten wiederum nicht mehr rückgängig gemacht werden, sodass folglich einmal gewählte Regelungen auch in dafür nicht adäquat ausgelegten Situationen ausgeführt werden. Einschätzungen jeweiliger Situationen können sich dabei mitunter so komplex darstellen, sodass Objekte bzw. Systeme, welche sich ausschließlich auf verwendete Sensoriken und rein technischen Auswertungen von weiteren Informationen hinsichtlich ihrer abgeleiteten autonomen oder hochgradig automatisierten Handlungsabfolgen beziehen, hier nicht zielführend einsetzbar sind.

### ZUSAMMENFASSUNG DER ERFINDUNG

Vor diesem Hintergrund ist es ein Ziel der vorliegenden Erfindung, ein Verfahren, ein Steuergerät sowie ein Objekt bereitzustellen, welches zumindest anteilig die zuvor genannten Nachteile überkommen.

Diese Aufgabe wird durch ein Verfahren mit den Merkmalen des Anspruchs 1 sowie durch ein Steuergerät mit den Merkmalen des Anspruchs 9 sowie durch ein Objekt mit den Merkmalen des Anspruchs 10 gelöst.

Gemäß der Erfindung ist ein Verfahren zur Steuerung eines Systems zur Beeinflussung eines für einen Autonomiebetrieb ausgestattetem mobilen Objekts vorgesehen, welches umfasst: Bereitstellen eines Systems mit Steuerungsprogramm zur Beeinflussung eines für einen Autonomiebetrieb ausgestattetem mobilen Objekts in einem für einen Autonomiebetrieb ausgestattetem mobilen Objekt, Starten des Systems, Starten des Objekts, Einstellen von Autonomiegraden des Systems in Abhängigkeit wenigstens eines Auslöseereignisses, sodass mittels des jeweiligen gewählten Autonomiegrades wenigstens ein Betriebsparameter des Objekts zur Einstellung dessen Autonomiebetriebs beeinflusst wird.

Weiterhin ist gemäß der Erfindung ein Steuergerät, insbesondere ein zumindest teilweise virtuelles Steuergerätsystems, zur Steuerung eines Objekts, vorgesehen, in welchem ein erfindungsgemäßes Verfahren zumindest teilweise vorgehalten ist und welches ausgelegt ist zumindest anteilig gemäß zumindest eines der Verfahrensschritte des erfindungsgemäßen Verfahrens zu funktionieren.

Weiterhin ist gemäß der Erfindung ein Objekt, insbesondere ein flugfähiges Objekt, vorgesehen, welches wenigstens ein erfindungsgemäßes Steuergerät insbesondere ein zumindest teilweise virtuelles Steuergerätesystem, umfasst.

Eine Idee der vorliegenden Erfindung ist es daher, zukünftige Regelungen von autonomen bzw. hochgradig automatisierten Technologien in Verfahren oder in Steuergeräten mit entsprechenden Verfahrensanweisungen mittels geeigneter Beschränkungen, beispielsweise der Algorithmen oder dergleichen, abzubilden. Autonomiegrade können dann auf Funktionen mit erlaubten Freiheitsgraden abgebildet werden. Algorithmen für autonome Systeme können durch Einschränkungen, zum Beispiel durch Verbote von gewissen Aktionen, Beschränkungen von zulässigen Operationsgebieten oder dergleichen, getrimmt werden.

Auf diese Weise können etwa eingesetzte Algorithmen selbst weitgehend unabhängig von konkreten Autonomie-Anforderungen gehalten werden. Beschränkungen können dabei etwa auf unterschiedliche Weise im Code manifestiert werden und in spezifischen Ausprägungen mittels verschiedener Verfahren auf ein mobiles Objekt, welches auch allgemein als Plattform bezeichnet werden kann, gebracht werden. Dabei ermöglicht etwa solch ein Verfahren, mit geringem Aufwand Plattformen entsprechend unterschiedlichster Anforderungen zu konfigurieren. Auch kann mittels des vorgestellten Verfahrens eine dynamische Umkonfiguration am fertigen Produkt erlaubt werden, sodass auf geänderte Vorgaben, beispielsweise aufgrund von sich verändernden Randbedingungen während hochdynamischer Einsätze oder dergleichen, schnell und folgerichtig und vor allem im Rahmen von vorgegebenen Regelwerken reagiert werden kann.

Mittels des vorgestellten Verfahrens kann somit mit Vorteil erreicht werden, eine variable Anpassung von Verfahrensabläufen entsprechend von sich entwickelnden Autonomie-Anforderungen zu bewirken, ohne dass dabei eine letztmögliche Kontrollinstanz übergangen werden kann oder ohne dass es zu ungewollten Zuständen kommt, die ausschließlich auf zuvor getätigten Voreinstellungen beruhen würden. Im abstrakten Sinne bietet somit das erfindungsgemäße Verfahren eine Abbildung von einzustellenden Autonomiegraden durch Einschränkungen im Sinne des Auslöseereignisses.

Die zuvor genannten Vorteile gelten, soweit übertragbar, auch für das vorgestellte Steuergerät sowie das vorgestellte Objekt.

Gemäß einer weiteren Ausführungsform der Erfindung ist vorgesehen, dass das Auslöseereignis durch eine Zuführung und Ausführung, insbesondere einer Zuführung während eines mobilen Betriebs des Objekts, von wenigstens einem weiteren Steuerungsprogramm an das System und auf dem System bewirkt wird.

Auf diese Weise wird das bereits vorhandene Steuerungsprogramm erst durch die Zuführung eines weiteren Steuerungsprogramm derart erweitert, sodass somit etwa höhere Einstellungen von Autonomiegraden des Systems letztendlich erst bewirkbar werden, sodass mittels des jeweiligen gewählten Autonomiegrades wenigstens ein Betriebsparameter des Objekts zur Einstellung dessen Autonomiebetriebs beeinflusst wird. Somit werden einzustellende Autonomiegrade im übertragenen Sinne durch Einschränkungen der Algorithmen ermöglicht. Der Vorteil besteht somit darin, dass erst mit der Zuführung und Ausführung der zugeführten zusätzlichen Komponente ein gewünschter benutzerdefinierter Autonomiegrad eingestellt wird. Ohne diese zusätzliche Komponente besteht somit keine Gefahr, dass aufgrund von unvorhergesehenen Ereignissen sich eine nicht gewollte Verselbstständigung, beispielsweise des Objekts, einstellt. Anders gesagt, kann somit etwa vorgesehen werden, dass ein maximaler Autonomiegrad solange nicht aktivierbar ist, solange das erweiterte Steuerungsprogramm noch nicht zugeführt und ausgeführt wird.

Ein weiterer Vorteil besteht darin, dass weitestgehend eine Basisversion von Verfahrensanweisungen, beispielsweise in Form von entsprechend vorgehaltenen Algorithmen oder dergleichen, für verschiedene Einsätze genutzt werden kann, wobei je nach zusätzlich aufgespielter und dann ausgeführter Komponente eine gewünschte Individualisierung realisiert werden kann. Somit können verschiedene Autonomie-Verfahren ohne jeweilige Neuentwicklungen realisiert werden, sodass Entwicklungsaufwände grundsätzlich nur einmal aufgewendet werden müssen. Je nach Anwendungsfall und Kritikalität (Friedensmanöver, kriegerische Auseinandersetzung, Auslandseinsatz, deklarierter Verteidigungsfall) und benötigter Sicherheitsanforderungen, könne aus derselben Quelle somit verschiedene Autonomie-Versionen eines Systems erzeugt werden.

Dabei kann die Konfiguration je nach Ausbildung des Verfahrens in dieser Variante vor oder sogar während einer durchzuführenden Mission geändert werden. Es findet somit eine Verteilung von Steuerungsprogrammbestandteilen statt, wobei die Zusammenführung bereits ein Bestandteil oder sogar der Bestandteil einer Aktivierung eines vorgesehenen und einzustellenden Autonomiegrad darstellten kann.

Es ist mit anderen Worten vorstellbar, dass weitere Einstellungen von Autonomiegraden, insbesondere von etwa einer vollautomatisierten und vollständig autonomen Betriebsweise, erst nach Durchführung des Auslöseereignisses bewirkt werden können. Je nach Ausprägung des weiteren Steuerungsprogramm kann somit eine geeignete Implementierung für den anstehenden und jeweiligen Einsatz vorgenommen bzw. implementiert werden, wobei dies bis zur Erlaubnis eines maximal erlaubten Autonomiegrades führen kann.

Dabei ist allgemein eine jeweilige Implementierung mit unterschiedlichen Konfidenzen vorstellbar, wobei dies mittels einer jeweiligen Ausprägung des erweiterten Steuerungsprogramm, welche etwa unter anderem auch durch das weitere Steuerungsprogramm bewirkt werden kann, erfolgen kann.

Es ist somit möglich, dass das zunächst mitgeführte Steuerungsprogramm in Form eines entsprechenden Algorithmus so kodiert werden kann, sodass dann aus dem Algorithmus selbst mit der entsprechenden richtigen Ergänzung verschiedene Autonomiegrade erzeugt werden können. Dies kann ähnlich der Erzeugung von *make-files* (*make-files =* Datei erstellen) vorgesehen werden. Das heißt, dass der jeweils erzeugte Code die Einschränkungen *hard-coded* (*hard-coded* = hartkodiert) enthalten kann bzw. manche Algorithmen gar nicht in dem eigentlichen Steuerungsprogramm ohne die Erweiterung erzeugt werden können. Dadurch, dass zunächst gar kein Code auf dem System vorgehalten wird, der höhere Autonomiegrade realisiert, kann somit mit Vorteil eine maximale Sicherheit erreicht werden. Ein weiterer Vorteil dieser Ausführungsvariante besteht darin, dass somit eine Erzeugung und auch eine Zertifizierung von verschiedenen Systemversionen mit entsprechenden unterschiedlichen Autonomiegraden auch ohne eine Anpassung von Hardwarekomponenten des Systems möglich sein kann.

Es kann auf diese Weise möglich sein, dass in einer jeweiligen aktiven Autonomie-Steuerungsprogramm-Version, beeinflusst etwa durch die Auswahl und Gestaltung des übertragenem und erweiterten Steuerungsprogramms, kein nicht-benötigter Code vorgesehen ist, was wiederum eine wichtige Voraussetzung für eine Zulassung ist. Mit Vorteil kann somit eine flexible und breit einzusetzende Technologie erreicht werden, ohne dabei auf die Möglichkeit von hochgradig automatisierten Versionen oder sogar von vollautonomen Versionen verzichten zu müssen. Die vorgesehene Skalierung kann mit maximaler Sicherheit an jeweilige Einsatzszenarien im Einklang mit dafür vorgegebenen Regelwerken bereitgestellt werden, wobei die vorgestellte Lösung auf überraschend einfache Weise den gewünschten technischen Effekt bereitstellt.

Die Aufteilung in Steuerungsprogramm und erweitertes Steuerungsprogramm kann zudem so eingesetzt werden, sodass resultierende Autonomie-Programm-Versionen, welche etwa in Abhängigkeit von auszuwählenden Inhalten der Erweiterung festgelegt werden, jeweils unabhängig von anderen Versionen getestet werden können, was wiederum einen Vorteil insbesondere bei Zertifizierungsprozessen aber auch bei Qualitätskontrollroutinen darstellt.

Gemäß einer weiteren Ausführungsform der Erfindung ist vorgesehen, dass das System mit Steuerungsprogramm wenigstens zwei getrennt voneinander vorgehaltene Hardwarekomponenten umfasst, auf welchen das Steuerungsprogramm oder das Steuerungsprogramm mit einem weiteren Steuerungsprogramm jeweils anteilig in zumindest zwei Bestandteilen vorgehalten wird, und das Auslöseereignis zumindest durch einen Kopplungsvorgang der wenigstens zwei getrennt voneinander vorgehaltenen Hardwarekomponenten vorgesehen wird.

Somit ist auf vorteilhafte Weise möglich, jeweilige benötigten Informationen für die zu erreichenden Autonomiegrade physikalisch auf zwei voneinander getrennten Hardwarekomponenten vorzuhalten, wobei erst nach einer Verbindung, sprich Kopplung, dieser Komponenten ein gewünschter Autonomiegrad bewirkt werden kann. Dies kann beispielsweise in einer stufenförmigen Zuschaltung vollzogen werden. Auch kann im Vorfeld ein höchster zu erreichender Autonomiegrad durch den gesamten, nach dem Kopplungsvorgang erhaltenen Algorithmus oder dergleichen festgelegt werden.

Gemäß einer weiteren Ausführungsform der Erfindung ist vorgesehen, dass der Kopplungsvorgang durch ein weiteres Steuerprogramm ausgelöst wird oder wobei der Kopplungsvorgang durch eine Zuführung, insbesondere einer Zuführung während eines mobilen Betriebs des Objekts, von wenigstens einem weiteren Steuerungsprogramm an das System bewirkt wird oder wobei der Kopplungsvorgang durch ein weiteres Steuerprogramm ausgelöst wird und wobei der Kopplungsvorgang durch eine Zuführung, insbesondere einer Zuführung während eines mobilen Betriebs des Objekts, von wenigstens einem weiteren Steuerungsprogramm an das System bewirkt wird oder wobei der Kopplungsvorgang mittels zumindest eines Schaltvorgangs einer physisch vorgehaltenen Schaltvorrichtung des Systems bewirkt wird oder wobei der Kopplungsvorgang mittels zumindest eines Schaltvorgangs einer physisch vorgehaltenen Schaltvorrichtung des Objekts bewirkt wird oder wobei der Kopplungsvorgang anteilig mittels zumindest eines Schaltvorgangs einer physisch vorgehaltenen Schaltvorrichtung des Objekts und mittels zumindest eines Schaltvorgangs einer physisch vorgehaltenen Schaltvorrichtung des Systems bewirkt wird.

Auf vorteilhafte Weise kann das Verfahren je nach gewünschten zu erhaltenen Freiheitsgraden hinsichtlich einzustellender Autonomiegrade auf eine jeweilige Einsatzregion oder allgemein auf mutmaßliche Einsatzszenarien eingestellt werden, sodass mittels des jeweiligen gewählten Autonomiegrades wenigstens ein Betriebsparameter des Objekts zur Einstellung dessen Autonomiebetriebs beeinflusst werden kann. Je nach gewünschtem Grad an Sicherheit kann eine entsprechende Variante des Kopplungsvorgangs letztendlich die Einstellung des gewünschten Autonomiegrades herbeiführen, sodass auf vorteilhafte Weise ein besonders flexibles Verfahren bereitgestellt werden kann.

Gemäß einer weiteren Ausführungsform der Erfindung ist vorgesehen, dass das Steuerungsprogramm in benutzerdefinierter Weise in zumindest zwei Bestandteile auf einer zumindest eine Partition umfassenden Hardwarekomponente des Systems aufgeteilt vorgehalten wird und die zumindest zwei Bestandteile zum Zwecke der Einstellung eines Autonomiegrads des Systems mittels eines weiteren Steuerprogramms gekoppelt werden, wobei das weitere Steuerprogramm ausgewählt ist aus: Extern vor der Kopplung auf das System aufgespieltes weiteres Steuerungsprogramm; vor der Kopplung freigeschaltetes weiteres Steuerungsprogramm, wobei die Freischaltung in Abhängigkeit eines mittels des Systems detektierten Zustands des Objekts oder in Abhängigkeit eines Zustands einer physischen Schaltvorrichtung des Systems bewirkt wird.

Die zuvor genannten Vorteile können somit noch flexibler bereitgestellt werden. Insbesondere Varianten, welche physische Umschaltvorgänge umfassen, können dabei eine besonders gezielte und bewusste Entscheidungsgrundlage für einen gewünschten einzustellenden Autonomiegrad bereitstellen, sodass auch kurzfristig auf sich hochdynamisch ändernde Einsatzszenarien mit Vorteil reagiert werden kann.

Gemäß einer weiteren Ausführungsform der Erfindung ist vorgesehen, dass die jeweils eingestellten Autonomiegrade des Systems ausgewählt sind aus: Minimaler Autonomiegrad; niedriger Autonomiegrad; hoher Autonomiegrad; maximaler Autonomiegrad, Autonomiegrad in einem Intervall von minimalstem Autonomiegrad bis zu einem maximalsten Autonomiegrad; und wobei ein jeweils eingestellter Autonomiegrad des Systems unmittelbar einen entsprechenden Autonomiegrad des Objekts bewirkt.

Je nach ausgewähltem Auslöseereignis kann benutzerdefiniert ein jeweiliger gewünschter oder erlaubter Autonomiegrad eingestellt und somit zugelassen werden. Die Abstufung bietet somit den Vorteil, dass je nach erlaubten Rahmenbedingungen gemäß einzuhaltenden Regelwerken eine entsprechende Einstellung ermöglicht werden kann, ohne dass eine Voreinstellung bereits vor einem eigentlichen Einsatz einen starren Rahmen eines Autonomiegrads des zu bewegenden Objekts fixiert oder begrenzt. Ein minimalster Autonomiegrad kann sich etwa dadurch auszeichnen, dass lediglich ein Freiheitsgrad bezüglich einer einzustellenden Komponente und/oder eines einzustellenden Vorgangs oder dergleichen bewirkbar sein soll. Weiterhin kann sich folglich etwa ein maximalster Autonomiegrad dadurch auszeichnen, dass lediglich ein Freiheitsgrad bezüglich einer einzustellenden Komponente und/oder eines einzustellenden Vorgangs nicht automatisiert bewirkbar sein soll. Mit anderen Worten reicht das vorgesehene Intervall von einer minimalsten Vorgehensweise eines einstellbaren Autonomiegrades stufenlos bis hin zur nahezu vollständigen hochautomatisierten Kontrollmöglichkeiten im Sinne eines ausgewählten Autonomiegrades.

Gemäß einer weiteren Ausführungsform der Erfindung ist vorgesehen, dass das Einstellen von Autonomiegraden des Systems in Abhängigkeit wenigstens eines der zuvor genannten Auslöseereignisse und eines mittels des Systems detektierten Zustands des Objekts oder eines mittels des Objekts an das System übermittelten Steuerungssignals bewirkt wird.

Diese Erweiterung kann somit weitere flexibel zu absolvierende Einsatzszenarien ermöglichen, wobei die eingesetzte Technologie im Sinne der vorliegenden Erfindung stets im Rahmen der erlaubten Regelwerke mit Vorteil eingesetzt werden kann.

Gemäß einer weiteren Ausführungsform der Erfindung ist vorgesehen, dass das Objekt ausgewählt ist aus: Landfahrzeug; flugfähiges Fahrzeug; Wasserfahrzeug, Wasser- und Landfahrzeug; Unterwasserfahrzeug; ferngesteuertes Landfahrzeug; ferngesteuertes flugfähiges Fahrzeug; ferngesteuertes Wasserfahrzeug, ferngesteuertes Wasser- und Landfahrzeug; ferngesteuertes Unterwasserfahrzeug.

Das vorgestellte Verfahren kann mit Vorteil entsprechend angepasst in den vorgestellten Fahrzeugtypen eingesetzt werden. Der Begriff Fahrzeug ist in diesem Sinne breit auszulegen und kann beispielsweise auch unbemannte und schnell fliegende Objekte oder dergleichen umfassen. Ein Fernsteuerungsbetrieb kann dabei in jeglichen Ausführungsgraden vorgesehen sein, wobei beispielsweise auch vorstellbar ist, dass lediglich zumindest eine ferngesteuerte Funktion, beispielsweise in Form eines Auslösemechanismus für das Auslöseereignis vorgesehen werden kann.

Gemäß einer weiteren Ausführungsform der Erfindung ist vorgesehen, dass das Auslöseereignis zumindest anteilig durch einen zumindest anteiligen Austausch des Steuerungsprogramms durch ein weiteres Steuerungsprogramm, welches sich zumindest anteilig von dem zu ersetzenden Steuerungsprogramm unterscheidet, bewirkt wird.

Auf diese Weise wird auf vorteilhafte Weise ein noch flexibleres und auf die Bedürfnisse eines jeweiligen Ereignisses proaktives Verfahren ermöglicht. Denkbar ist beispielsweise, dass aufgrund des möglichen und gezielt bewirkten Austauschvorgangs hochdynamisch auf sich verändernde Randbedingungen eingegangen werden kann. Neben einer Ergänzung sind auf diese Weise somit auch gänzliche Austauschvorgänge bewirkbar, sodass je nach unmittelbar sich einstellender Bedürfnisse eine hochgradig flexible Verfahrensvorgangsweise ermöglicht und bewirkt werden kann. Neben einem ausschließlichen Auslöseereignis in Form etwa eines kompletten Austausches ergeben sich eine Fülle von Untervarianten, die je nach gewünschtem und benötigten Autonomiegrad hochdynamisch und/oder in nahezu Echtzeit und vor allem mit Vorteil im Sinne der vorgesehenen, Aufgabenstellung bereitstellbar sind.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren zur Steuerung eines Systems zur Beeinflussung eines für einen Autonomiebetrieb ausgestattetem mobilen Objekts;
- Fig. 2: eine schematische Darstellung von einem Steuergerät;
- Fig. 3: eine schematische Darstellung von einem Objekt.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

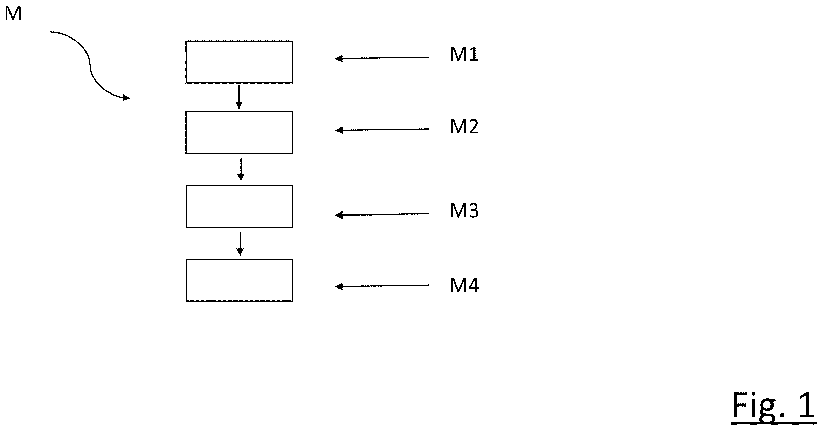

Fig. 1 zeigt ein schematisches Flussdiagramm für ein Verfahren M zur Steuerung eines Systems zur Beeinflussung eines für einen Autonomiebetrieb ausgestattetem mobilen Objekts 120. Dieses Verfahren M umfasst dabei die folgenden Verfahrensschritte. In einem ersten Verfahrensschritt M1 wird ein System mit Steuerungsprogramm 1 zur Beeinflussung eines für einen Autonomiebetrieb ausgestattetem mobilen Objekts 120 in einem für einen Autonomiebetrieb ausgestattetem mobilen Objekt 120 bereitgestellt. In einem zweiten Verfahrensschritt M2 wird das System gestartet. In einem dritten Verfahrensschritt M3 wird das Objekt 120 gestartet. In einem vierten Verfahrensschritt M4 werden Autonomiegrade des Systems in Abhängigkeit wenigstens eines Auslöseereignisses eingestellt, sodass mittels des jeweiligen gewählten Autonomiegrades wenigstens ein Betriebsparameter des Objekts 120 zur Einstellung dessen Autonomiebetriebs beeinflusst wird.

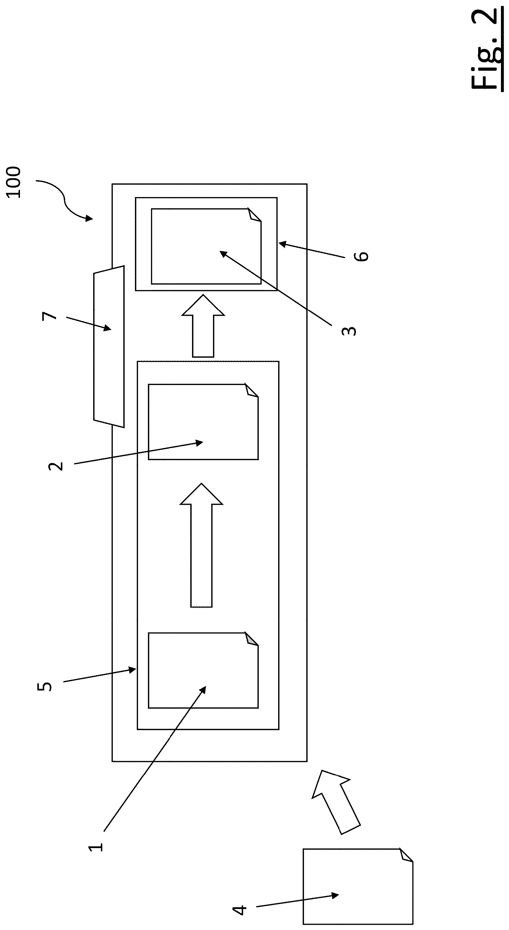

Fig. 2 zeigt eine schematische Darstellung von einem Steuergerät 100. In der gezeigten Ausführungsvariante handelt es sich um ein physikalisch vorhandenes Steuergerät 100, welches ein Steuerungsprogramm 1 und ein erstes erweitertes Steuerungsprogramm 2 und ein zweites erweitertes Steuerungsprogramm 3 und ,außerhalb des Steuergeräts 100, ein drittes erweitertes Steuerungsprogramm 4 aufweist. Insofern zeigt Fig. 2 ein erfindungsgemäßes Steuergerät 100, in welchem ein erfindungsgemäßes Verfahren M zumindest teilweise vorgehalten ist und welches ausgelegt ist, zumindest anteilig gemäß zumindest einer der Verfahrensschritte des erfindungsgemäßen Verfahrens M zu funktionieren.

In dieser gezeigten Ausführungsvariante des Steuergeräts 100 sind sowohl das Steuerungsprogramm 1 als auch das erste erweiterte Steuerungsprogramm 2 auf einer ersten Hardwarekomponete 5, etwa in Form einer hierfür vorgesehenen Partition, vorgesehen. Dabei weist das Steuerungsprogramm 1 einen minimalen Autonomiegrad auf, sodass ohne weitere Kopplung von Erweiterungen nur ein minimaler Autonomiegrad eines mit diesem Steuergerät 100 gekoppeltem nicht näher dargestellten mobilen Objekts bewirkt werden kann. Nach erfolgreicher Kopplung mit dem ersten erweitertem Steuerungsprogramm 2 ist das Steuergerät 100 nunmehr qualifiziert, einen niedrigen Autonomiegrad eines mit diesem Steuergerät 100 gekoppeltem nicht näher dargestellten mobilen Objekts zu bewirken bzw. zu ermöglichen. Solch ein Kopplungsvorgang kann beispielsweise von einem zugeführten erweiterten Steuerungsprogramm 4, welches für diese Zwecke reduziert bzw. mittels Flags oder Konfig-files manipuliert ist, bewirkt werden. Hier könnten dann benötigte Algorithmen komplett aufgebracht werden, wobei die Einschränkungen dann durch besagte Flags oder Konfig-files aktiviert bzw. deaktiviert werden. Alternativ sind weitere Kopplungsvorgänge vorstellbar. Anders gesagt ist in gesonderten Ausführungsvarianten vorstellbar, dass durch einen jeweiligen geeigneten Breakdown von gewünschtem, zulässigen Verhalten auf Unterfunktionen, Einschränkungen definiert werden können, die folglich den zulässigen Autonomiegrad abbilden.

Nach erfolgreicher Kopplung mit dem zweiten erweitertem Steuerungsprogramm 3 ist das Steuergerät 100 nunmehr qualifiziert, einen hohen Autonomiegrad eines mit diesem Steuergerät 100 gekoppeltem nicht näher dargestellten mobilen Objekts zu bewirken bzw. zu ermöglichen. Das zweite erweiterte Steuerungsprogramm 3 ist in der dargestellten Ausführungsvariante auf einer zweiten Hardwarekomponete 6, etwa in Form einer hierfür vorgesehenen Partition, vorgesehen. Solch ein Kopplungsvorgang kann beispielsweise durch einen physisch ausgeführten Schaltvorgang oder dergleichen bewirkt werden. Auch Kombinationen von den zuvor genannten Kopplungsarten sind vorstellbar.

Nach erfolgreicher Kopplung mit dem dritten erweitertem Steuerungsprogramm 4, welches für diese Zwecke dem Steuergerät 100 von außen zugeführt wird, ist das Steuergerät 100 nunmehr qualifiziert, einen maximalen Autonomiegrad eines mit diesem Steuergerät 100 gekoppeltem nicht näher dargestellten mobilen Objekts zu bewirken bzw. zu ermöglichen.

In einer nicht näher dargestellten Ausführungsvariante ist vorstellbar, dass lediglich das Steuerungsprogramm 1 auf dem physikalischen Steuergerät 100 in einer für diese Zwecke ausgelegten Speichereinheit vorgehalten wird und jegliche erweiterten Steuerungsprogramme 2, 3, 4 von außen zugeführt werden. Es ist allgemein vorstellbar, dass jegliche gängige Übertragungswege bei einer Zuführung von außen zu dem Steuergerät 100 vorgesehen werden, insbesondere jegliche funkwellenbasierten Übertragungswege sind dabei vorstellbar. In diesem Zusammenhang ist vorstellbar, dass das Steuergerät 100 die für den Empfang bzw. allgemein für diese Zuführung benötigten Schnittstellen und technischen Komponenten aufweist. Auch Zuführungen via Datenkabel oder dergleichen sind vorstellbar.

In dieser in Fig. 2 gezeigten Ausführungsvariante des Steuergeräts 100 weist dieses zudem eine physisch vorgehaltene Schaltvorrichtung 7 auf. Diese Schaltvorrichtung 7 ist dabei ausgelegt einen Kopplungsvorgang zu bewirken, sodass das Steuerungsprogramm 1 mit einem erweiterten Steuerungsprogramm 2, 3, 4 zusammengeführt werden kann.

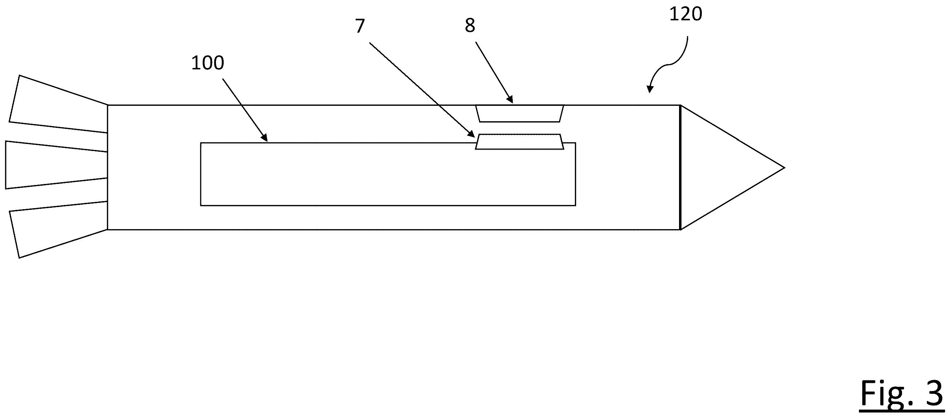

Fig. 3 zeigt eine schematische Darstellung von einem Objekt 120. In diesem Fall handelt es sich um ein unbenanntes flugfähiges Objekt in Form eines Lenkflugkörpers. Dabei ist das Objekt 120 mit einem erfinderischen Steuergerät 100 mit Schaltvorrichtung 7 dargestellt. Das Objekt 120 weist zudem eine weitere Schaltvorrichtung 8 auf. Es ist vorstellbar, dass die Schaltvorrichtung 7 des Steuergeräts 100 und die weitere Schaltvorrichtung 8 des Objekts im funktionalen Zusammenhang stehen. Auch ist vorstellbar, dass jeder der Schaltvorrichtungen 7, 8 separat Kopplungsvorgänge an dem Steuergerät 100 bewirken können.

Mit anderen Worten ist vorstellbar, dass der Kopplungsvorgang mittels zumindest eines Schaltvorgangs der physisch vorgehaltenen Schaltvorrichtung 7 des Steuergeräts 100, welches auch als System benannt werden kann, bewirkt wird oder dass der Kopplungsvorgang mittels zumindest eines Schaltvorgangs der physisch vorgehaltenen Schaltvorrichtung 8 des Objekts 120 bewirkt wird oder dass der Kopplungsvorgang anteilig mittels zumindest eines Schaltvorgangs der physisch vorgehaltenen Schaltvorrichtung 8 des Objekts 120 und mittels zumindest eines Schaltvorgangs der physisch vorgehaltenen Schaltvorrichtung 7 des Steuergeräts 100 bewirkt wird.

In nicht näher dargestellten Ausführungsvarianten ist vorstellbar, dass das Objekt 120 in Form eines Landfahrzeugs, eines flugfähigen Fahrzeugs, eines Wasserfahrzeugs, eines Wasser- und Landfahrzeugs; eines Unterwasserfahrzeugs, eines ferngesteuerten Landfahrzeugs, eines ferngesteuerten flugfähigen Fahrzeugs, eines ferngesteuerten Wasserfahrzeugs, eines ferngesteuerten Wasser- und Landfahrzeugs oder eines ferngesteuerten Unterwasserfahrzeugs vorgesehen ist.

Das Steuerungsprogramm 1 und die erweiterten Steuerungsprogramme 2, 3, 4 können beispielsweise komplett oder jeweils nur anteilig basierend auf den zehn Autonomiegraden nach SHERIDAN (SHERIDAN, T. B. (1992): Telerobotics, Automation and Human Supervisory Control. The MIT Press) oder basierend auf den elf Autonomy Control Levels nach BRUCH, T. CLOUGH oder basierend auf einen OODA-basierten Ansatz mit acht Leveln nach PROUD, HART und MROZINSKI oder basierend auf dem PACT-Framework nach BOONER, TAYLOR & MILLER mit sechs Leveln oder basierend auf den drei Degrees of CAC (Contextual Autonomous Capability der ALFUS (Autonomy Levels For Unmanned Systems) Working Group vorgesehen sein. Auch jegliche Kombinationen der vorgestellten Konzepte, soweit technisch sinnvoll und realisierbar, sind vorstellbar.

Die Steuerungsprogramme 1, 2, 3, 4 können in jeglichen offenbarten Ausführungsvarianten jeweils anteilig Informationen im Sinne von Handlungsanweisungen und dergleichen umfassen, welche sich dann in konkreten Einschränkungen für hohe Autonomiegrade niederschlagen. Diese Einschränkungen können beispielsweise im Rahmen eines OODA-basierten Ansatz dazu führen, dass nur bestimmte Radarfrequenzen von dem mobilen Objekt 120 verwendet werden dürfen. Auch können jeweilige Einstellungen von Autonomiegraden darauf basieren, das bestimmte Tasks bzw. einzustellenden Betriebsparameter nur bewirkt werden dürfen, wenn beispielsweise zumindest drei widerspruchsfreie Sensorinformationen vorliegen bzw. zumindest drei widerspruchsfreie Sensoren vorgenommen werden. Auch können Anweisungen aus den Steuerungsprogrammen 1, 2, 3, 4 nach erfolgreicher Kopplung ausgelegt sein, sodass nur bestimmte Tasks von dem Objekt 120 berücksichtigt werden dürfen (z. B. IAW, RoE, nur innerhalb eines Gebiets). Auch kann vorgesehen sein, dass nur nicht kinetische Tasks durch Bestätigung des Operateurs des Objekts 120 ausgeführt werden dürfen (z. B. EW). Zudem könnte auch vorgesehen sein, dass nur nicht-kinetische Tasks ausgeführt werden (z. B. EW).

### BEZUGSZEICHENLISTE

- 1: Steuerungsprogramm
- 2: erstes erweitertes Steuerungsprogramm
- 3: zweites erweitertes Steuerungsprogramm
- 4: drittes erweitertes Steuerungsprogramm
- 5: erste Hardwarekomponete
- 6: zweite Hardwarekomponete
- 7: Schaltvorrichtung
- 8: weitere Schaltvorrichtung
- 100: Steuergerät
- 120: Objekt
- M: Verfahren
- M1: erster Verfahrensschritt
- M2: zweiter Verfahrensschritt
- M3: dritter Verfahrensschritt
- M4: vierter Verfahrensschritt

## Patentansprüche

1. Verfahren (M) zur Steuerung eines Systems zur Beeinflussung eines für einen Autonomiebetrieb ausgestattetem mobilen Objekts (120) umfassend:
• Bereitstellen eines Systems mit Steuerungsprogramm (1) zur Beeinflussung eines für einen Autonomiebetrieb ausgestattetem mobilen Objekts (120) in einem für einen Autonomiebetrieb ausgestattetem mobilen Objekt (120);
• Starten des Systems;
• Starten des Objekts (120);
• Einstellen von Autonomiegraden des Systems in Abhängigkeit wenigstens eines Auslöseereignisses, sodass mittels des jeweiligen gewählten Autonomiegrades wenigstens ein Betriebsparameter des Objekts (120) zur Einstellung dessen Autonomiebetriebs beeinflusst wird.

2. Verfahren (M) gemäß Anspruch 1, wobei das Auslöseereignis durch eine Zuführung und Ausführung, insbesondere einer Zuführung während eines mobilen Betriebs des Objekts (120), von wenigstens einem weiteren Steuerungsprogramm an das System und auf dem System bewirkt wird.

3. Verfahren (M) gemäß einem der vorherigen Ansprüche, wobei das System mit Steuerungsprogramm (1) wenigstens zwei getrennt voneinander vorgehaltene Hardwarekomponenten (5, 6) umfasst, auf welchen das Steuerungsprogramm (1) oder das Steuerungsprogramm (1) mit einem weiteren Steuerungsprogramm (2, 3, 4) jeweils anteilig in zumindest zwei Bestandteilen vorgehalten wird, und das Auslöseereignis zumindest durch einen Kopplungsvorgang der wenigstens zwei getrennt voneinander vorgehaltenen Hardwarekomponenten (5, 6) vorgesehen wird.

4. Verfahren (M) gemäß Anspruch 3, wobei der Kopplungsvorgang durch ein weiteres Steuerprogramm (2, 3, 4) ausgelöst wird oder wobei der Kopplungsvorgang durch eine Zuführung, insbesondere einer Zuführung während eines mobilen Betriebs des Objekts (120), von wenigstens einem weiteren Steuerungsprogramm (2, 3, 4) an das System bewirkt wird oder wobei der Kopplungsvorgang durch ein weiteres Steuerprogramm (2, 3, 4) ausgelöst wird und wobei der Kopplungsvorgang durch eine Zuführung, insbesondere einer Zuführung während eines mobilen Betriebs des Objekts (120), von wenigstens einem weiteren Steuerungsprogramm (2, 3, 4) an das System bewirkt wird oder wobei der Kopplungsvorgang mittels zumindest eines Schaltvorgangs einer physisch vorgehaltenen Schaltvorrichtung (7) des Systems bewirkt wird oder wobei der Kopplungsvorgang mittels zumindest eines Schaltvorgangs einer physisch vorgehaltenen Schaltvorrichtung (8) des Objekts (120) bewirkt wird oder wobei der Kopplungsvorgang anteilig mittels zumindest eines Schaltvorgangs einer physisch vorgehaltenen Schaltvorrichtung (8) des Objekts (120) und mittels zumindest eines Schaltvorgangs einer physisch vorgehaltenen Schaltvorrichtung (7) des Systems bewirkt wird.

5. Verfahren (M) gemäß einem der vorherigen Ansprüche, wobei das Steuerungsprogramm in benutzerdefinierter Weise in zumindest zwei Bestandteile auf einer zumindest eine Partition umfassenden Hardwarekomponente des Systems aufgeteilt vorgehalten wird und die zumindest zwei Bestandteile zum Zwecke der Einstellung eines Autonomiegrads des Systems mittels eines weiteren Steuerprogramms (2, 3, 4) gekoppelt werden, wobei das weitere Steuerprogramm (2, 3, 4) ausgewählt ist aus: Extern vor der Kopplung auf das System aufgespieltes weiteres Steuerungsprogramm (4); vor der Kopplung freigeschaltetes weiteres Steuerungsprogramm (2, 3, 4), wobei die Freischaltung in Abhängigkeit eines mittels des Systems detektierten Zustands des Objekts (120) oder in Abhängigkeit eines Zustands einer physischen Schaltvorrichtung (7) des Systems bewirkt wird.

6. Verfahren (M) gemäß einem der vorherigen Ansprüche, wobei die jeweils eingestellten Autonomiegrade des Systems ausgewählt sind aus: Minimaler Autonomiegrad; niedriger Autonomiegrad; hoher Autonomiegrad; maximaler Autonomiegrad, Autonomiegrad in einem Intervall von minimalstem Autonomiegrad bis zu einem maximalsten Autonomiegrad; und wobei ein jeweils eingestellter Autonomiegrad des Systems unmittelbar einen entsprechenden Autonomiegrad des Objekts (120) bewirkt.

7. Verfahren (M) gemäß einem der vorherigen Ansprüche, wobei das Einstellen von Autonomiegraden des Systems in Abhängigkeit wenigstens eines der zuvor genannten Auslöseereignisses und eines mittels des Systems detektierten Zustands des Objekts (120) oder eines mittels des Objekts (120) an das System übermittelten Steuerungssignals bewirkt wird.

8. Verfahren (M) gemäß einem der vorherigen Ansprüche, wobei das Objekt (120) ausgewählt ist aus: Landfahrzeug; flugfähiges Fahrzeug; Wasserfahrzeug, Wasser- und Landfahrzeug; Unterwasserfahrzeug; ferngesteuertes Landfahrzeug; ferngesteuertes flugfähiges Fahrzeug; ferngesteuertes Wasserfahrzeug; ferngesteuertes Wasser- und Landfahrzeug; ferngesteuertes Unterwasserfahrzeug.

9. Verfahren (M) gemäß einem der vorherigen Ansprüche, wobei das Auslöseereignis zumindest anteilig durch einen zumindest anteiligen Austausch des Steuerungsprogramms durch ein weiteres Steuerungsprogramm, welches sich zumindest anteilig von dem zu ersetzenden Steuerungsprogramm unterscheidet, bewirkt wird.

10. Steuergerät (100), insbesondere ein zumindest teilweise virtuelles Steuergerätesystem, zur Steuerung eines Objekts (120), in welchem ein Verfahren (M) gemäß einem der Ansprüche 1 bis 9 zumindest teilweise vorgehalten ist und welches ausgelegt ist zumindest anteilig gemäß zumindest eines der Verfahrensschritte des Verfahrens (M) zu funktionieren.

11. Objekt (120), insbesondere ein flugfähiges Objekt, umfassend wenigstens ein Steuergerät (100), insbesondere ein zumindest teilweise virtuelles Steuergerätsystem, gemäß Anspruch 10.
